# EUROPEAN PATENT APPLICATION

(11) **EP 3 819 010 A1**
(43) Date of publication of application: **12.05.2021**
(21) Application number: 19830926.2
(22) Date of filing: 03.07.2019
(51) Int. Cl.: A63D 15/10, G01B 11/14, F21V 33/00, F21V 23/04

(54) **BILLIARDS POINTER FOR CHECKING THICKNESS AND SUPPORTING CUE**

(30) Priority: 06.07.2018 KR 20180078961
(71) Applicant: Go Cue Inc., Incheon 21990 (KR)
(72) Inventor: PARK, Jae Yong, Incheon 21982 (KR); PARK, Chul Hoon, Incheon 21985 (KR)
(74) Representative: Banzer, Hans-Jörg
(86) International application number: PCT/KR2019/008131
(87) International publication number: WO 2020/009471

(57) **Abstract**

The present invention relates to a billiards pointer for checking thickness and supporting a cue and, more particularly, to a billiards pointer in which a light irradiation ring is attached to an index finger so that two or more vertical lights are irradiated from the light irradiation ring, each irradiated vertical light, when a cue ball is being hit, simultaneously irradiates the cue ball and a first object ball to predict the degree of thickness by which the cue ball will hit the first object ball, the lights are blocked when the light irradiation is directed upward at a predetermined angle by means of a built-in tilt sensor, and a supporting ring fitted to a thumb is further provided, together with the light irradiation ring, to support the cue from above and below, thereby minimizing left and right rotations of the cue to enable precise hitting, so that beginners can easily understand, and enjoy a game of billiards.

## Description

### Technical Field

The present disclosure relates to a billiards pointer for checking thickness and supporting a cue and, more particularly, to a billiards pointer in which a light emission ring is attached to an index finger so that two or more vertical lights are emitted from the light emission ring, in which the emitted vertical lights are directed to both a cue ball and a first object ball, thereby predicting how thick the cue ball will collide with the first object ball when hitting the cue ball, in which the light is blocked by means of a built-in tilt sensor when the light is directed upward at a predetermined angle or more, and in which a supporting ring fitted to a thumb is further provided to support the cue from above and below together with the light emission ring, thereby minimizing sway of the cue to the left and right to enable precise hitting so that beginners are able to easily understand and enjoy a game of billiards.

### Background Art

In general, billiards is a kind of leisure sport in which each player obtains a score by hitting balls of red, white, and the like using a cue on a pool table. There are several games in billiards, which can be divided into carom games and pocket games. The carom games include four-ball games, balkline games, three-cushion games, and the like.

In addition, the cue used in billiards games is configured as a long bar including an upper part bar and a lower part bar, and is normally made of wood (or steel). Three or more billiard balls placed on the pool table for playing billiard games include a cue ball that is hit using the cue, a first object ball and a second object ball that the moving cue ball collides with.

In basic elements of billiards configured as described above, it is important to accurately hit a hit point of the cue ball using the cue, to check the degree of thickness by which the cue ball collides with the first object ball, and to determine the direction in which the bumped cue ball moves.

Among these basic elements of billiards, it is important to move the cue back and forth in a straight line during an aiming operation (stroke) before hitting the cue ball and a hitting operation (shot). However, most beginners or intermediate/lower-level players have a problem in which the cue sways during the aiming operation and the hitting operation, which makes it difficult to perform a correct shot. In addition, when the cue ball and the first object ball are located close to each other, the error range in the thickness is small. However, if the cue ball and the first object ball are spaced apart more than a certain distance, it is quite difficult to hit the cue ball so as to collide with the first object ball by a desired thickness, and it takes time to obtain a sense in relation to the thickness.

Korean Patent No. 10-1759701 (registered on July 13, 2017) (hereinafter, referred to as "prior document 1") proposes an auxiliary bridge for billiards. Prior document 1 provides an auxiliary bridge for billiards, which determines the position of a cue hitting a cue ball and guides the reciprocating motion of the cue, and which includes a finger insertion ring fitted to a finger, a cue support that guides stroke and shot motions of the cue placed thereon, and a light source that emits light toward the cue ball parallel to the direction of the front end of the cue and displays a hit point on the cue ball in order to detect the motion of the cue guided on the cue support. Although prior document 1 has a structure in which a hit point is displayed on the cue ball using the light source, the hit point is displayed in the relationship only between the cue and the cue ball, which is unable to provide information on the thickness between the cue ball and the object ball.

Korean Patent No. 10-1522636 (registered on May 18, 2015) (hereinafter, referred to as "prior document 2") proposes a device for exercising a billiard stroke. Prior document 2 includes: a support formed to extend in one direction and fixedly installed; a hit portion protruding upwards from one end of the support so as to be formed of a bendable elastic material and having an aiming hit point formed at an upper end thereof; a target portion protruding upwards from the opposite end of the support and having an aiming target point formed at an upper end thereof; and a plurality of auxiliary devices formed of plates having a curvature in a cross section on both sides of each of the hit portion and the target portion, wherein the hit portion and the target portion are formed of a plate having a curvature in a cross section, and wherein the auxiliary device and the hit portion or the auxiliary device and the target portion are arranged in an arc shape. Although prior document 2 enables training for accurately hitting the hit point of the cue ball using the cue, this also allows only hitting the hit point of the cue ball, and is unable to provide information on the thickness between the cue ball and the object ball.

As described above, the existing billiard assist devices are able to only guide the position of a hit point on the cue ball or provide a device for correcting a stroke posture, but are unable to provide prediction information on the degree of thickness by which the cue ball collides with the target ball depending on the hitting direction.

Therefore, there is a need for an auxiliary means that provides information on the degree of thickness by which the cue ball collides with the object ball so as to help a user in learning billiards, thereby enabling hitting in the correct direction.

### Detailed Description of the Invention

### Technical Problem

Accordingly, an objective of the present disclosure is to provide a billiards pointer for checking thickness and supporting a cue,
which is worn on a finger and emits two or more vertical lights in the same direction as the cue, wherein a first vertical light, among the plurality of vertical lights, passes through the center of a cue ball and reaches the first object ball, and
wherein the first vertical light and a second vertical light are spaced apart by the radius of the billiard ball at the position at which the first object ball is placed, thereby providing in advance information on the degree of thickness by which the hit cue ball collides with the first object ball.

In addition, another objective of the present disclosure is to provide a device that has a tilt sensor mounted thereto and blocks emitted light when the light is directed upwards at a predetermined angle, thereby preventing vision from being impaired by the light and improving safety.

In addition, another objective of the present disclosure is to allow the cue placed between a light emission ring and a supporting ring to move back and forth in one direction by wearing the light emission ring and the supporting ring, which have cue guide grooves, on the index finger and the thumb gripping the cue.

### Technical Solution

In order to solve the above problems, a billiards pointer for checking thickness and supporting a cue of the present disclosure
that is a billiards pointer worn on a finger to be used, which is configured as a light emission ring including: a light emission body having a luminous part in an accommodation space therein to transmit light to the outside in the form of vertical light, thereby simultaneously emitting the vertical light to a cue ball at a short distance and a first object ball at a long distance; and an attachment part having an upper plate rotatably coupled to a lower portion of the light emission body and a loop part formed to extend downwards from the upper plate and fitted to an index finger.

The rotatable coupling between the light emission body and the attachment part is provided by forming a hinge ball on the lower portion of the light emission body, by forming a ball recess, into which the hinge ball of the light emission body is inserted, on the upper plate of the attachment part, and by configuring a bottom surface of the light emission body and an upper surface of the upper plate to be spaced a predetermined distance apart from each other in a state in which the hinge ball is coupled to the ball recess, thereby enabling the light emission body to rotate and tilt up and down based on the coupling portion of the hinge ball and the ball recess.

The light emission body may include: a main body having an accommodation space formed therein; a luminous part, a power source, and a controller installed in the accommodation space of the main body; a button formed on the outer surface of the main body to operate the luminous part; and a vertical filter installed in the front surface of the main body or in the front surface of the luminous part and configured to transmit the light emitted from the luminous part in the form of vertical light so as to simultaneously emit the vertical light to the cue ball at a short distance and the first object ball at a long distance.

The main body of the light emission body may have a tilt sensor mounted thereto such that power supplied to the luminous part is shut off by the controller at a predetermined angle or more, thereby blocking the emission of the vertical light.

In addition, 2 to 12 luminous parts may be provided, and the respective luminous parts are arranged to be spaced apart by a radius of a billiard ball. The vertical filter may have a vertical light-transmission portion formed therein through which light passes, and is integrally installed in the front surface of each luminous part to emit vertical light.

In addition, the luminous part may include a first luminous part and a second luminous part, and one of two vertical lights emitted is used as a central vertical light passing through the center of the cue ball, and the other is used as a lateral vertical light, which is spaced at equal intervals from the central vertical light.

The first luminous part may be moved in the left and right direction by a side moving means to adjust the distance between the first luminous part and the second luminous part.

Here, the side moving means is configured to include: a support for supporting the first luminous part to be movable in the lateral direction; a rotation bar having one end exposed to the outside of the main body of the light emission body and receiving rotational force manually; and a gearbox for moving the first luminous part in the lateral direction by rotation of the rotation bar.

In addition, the side moving means includes: a support for supporting the first luminous part to be movable in the lateral direction; a gearbox for moving the first luminous part in the lateral direction; and a motor for transmitting power to the gearbox,
wherein a distance measurement sensor is mounted to the first luminous part, wherein the first luminous part is moved in the lateral direction to a side end of the cue ball in a state in which the vertical light emitted from the second luminous part is fixed to pass through the center of the cue ball, and wherein the first luminous part is further moved by the distance between the distance measurement sensor and the first luminous part, thereby configuring the distance between the first luminous part and the second luminous part to be the same as the radius of the billiard ball.

At this time, the side moving means may be controlled by: a first step of transmitting a click signal of the button of the light emission body to the controller; a second step of supplying power of the power source to the first luminous part and the second luminous part to emit light and operate the distance measurement sensor; a third step of arranging the vertical light of the second luminous part to pass through the center of the cue ball and configuring the measurement position of the distance measurement sensor as a horizontal line passing through the center of the cue ball; a fourth step of supplying power to the motor to horizontally move the first luminous part to which the distance measurement sensor is attached and transmitting a distance measurement value continuously measured by the distance measurement sensor to the controller; a fifth step of shutting off the power to the motor by the controller if discontinuity is detected in the measurement direction due to a sudden change in the received distance measurement value, thereby stopping the movement of the first luminous part; and a sixth step of further moving the first luminous part by the distance between the predetermined center of the first luminous part and the center of the distance measurement sensor by the controller.

In addition, the attachment part may have a guide groove formed on the bottom surface of the loop part in the light emission direction or in the longitudinal direction of the cue, and the guide groove may come into slidable contact with the upper surface of the cue to support the cue so as to move in the longitudinal direction without swaying during an aiming operation or a hitting operation.

In addition, a supporting ring having a loop part formed to insert the thumb thereinto and a rest groove formed on the upper surface thereof to place the cue thereon may be further configured, and when hitting the cue ball, the attachment part and the supporting ring may come into contact with the upper and lower portions of the cue, thereby supporting the cue to move only in the longitudinal direction.

The attachment part and the supporting ring may be integrally formed of a silicon material.

At this time, an insertion hole, into which the cue is inserted, may be formed between the attachment part and the supporting ring such that an inner layer is formed of a plastic material on the inner surface of the insertion hole, and the insertion hole may be vertically divided into three parts such that an upper inner layer is formed on the upper inner surface, such that a lower inner layer is formed on the lower inner surface, and such that an intermediate part is formed of only a silicon material so that the gap of the intermediate part is reduced when external pressure is applied.

### Advantageous Effects

A billiards pointer for checking thickness and supporting a cue according to the technical solution of the present disclosure is provided to be worn on a finger and emit lights,
wherein the emitted lights include at least two vertical lights to enable the cue, a cue ball, and a first object ball to be arranged in a straight line, and wherein a first vertical light, which passes through the center of the cue ball, and a second vertical light at one side of the first vertical light are spaced apart by the radius of a billiard ball at the position at which the first object ball is placed, thereby predicting the degree of thickness by which the hit cue ball collides with the first object ball, which gives the effect of improving billiard skills by helping trainees who begin to learn billiards, lower-level players, or users who are not confident of the thickness in understanding the thickness of billiards.

In addition, since a light emission body is configured to rotate or pivot vertically by ball coupling, it is possible to correct errors in the light emission direction due to differences in hand sizes, mounting positions, or gripping the cue between users by rotation or vertical pivoting of the light emission body, and to emit the light to the correct position, thereby providing a useful device that provides accurate thickness information.

### Brief Description of the Drawings

FIGS. 1A and 1B are a perspective view and a schematic cross-sectional view illustrating the configuration in which a light emission body and an attachment part are rotatably coupled according to an embodiment of the present disclosure.
FIG. 2 is a diagram illustrating the configuration of a light emission body according to a preferred embodiment of the present disclosure.
FIG. 3 is a diagram illustrating the configuration of a light emission body to which a manual side moving means is applied according to a preferred embodiment of the present disclosure.
FIGS. 4A and 4B are a diagram illustrating the configuration of a light emission body to which an automatic side moving means is applied and a flowchart illustrating the process thereof according to the present disclosure.
FIGS. 5A and 5B are schematic diagrams illustrating the state of using a billiards pointer having two luminous parts according to an embodiment of the present disclosure.
FIG. 6 is a schematic diagram illustrating a light emission body having three luminous parts according to another embodiment of the present disclosure.
FIGS. 7A and 7B are a side view and a front view illustrating a billiards pointer in which a guide groove is formed according to an embodiment of the present disclosure.
FIGS. 8A and 8B is a perspective view and a plan view illustrating a supporting ring having a rest groove formed therein according to another embodiment of the present disclosure.
FIGS. 9A to 9C are side views illustrating the configuration in which a light emission ring and a supporting ring are integrally formed according to another embodiment of the present disclosure.

### Mode for Carrying Out the Invention

Hereinafter, embodiments of the present disclosure will be described in detail with reference to the accompanying drawings. The present disclosure may be modified in various ways, and may have various forms, so specific embodiments will be illustrated in the drawings and the present disclosure will be described in detail herein. However, it should be understood that this is not intended to limit the present disclosure to a specific form of disclosure and encompasses all changes, equivalents, and substitutes included in the spirit and scope of the present disclosure. In describing drawings, similar reference numerals are used for similar elements. In the accompanying drawings, the dimensions of the structures are shown to be enlarged or reduced from the actual one for clarity of the present disclosure.

The terms used in the present application are used only for description of specific embodiments, and are not intended to limit the present disclosure. Singular expressions include plural expressions unless clearly stated otherwise. In the present application, terms such as "comprise", "include", "have", and the like are intended to specify the existence of features, numbers, steps, operations, elements, or combinations thereof described in the specification, and must be understood that the possibility of the presence or addition of one or more other features, numbers, steps, operations, elements, or combinations thereof is not preliminarily excluded.

Unless otherwise defined, all terms used herein, including technical or scientific terms, have the same meaning as commonly understood by those of ordinary skill in the art to which the present disclosure pertains. Terms that are commonly used and defined in a dictionary should be interpreted as having a meaning consistent with the meaning of the related technology, and should not be interpreted as an ideal or excessively formal meaning unless explicitly defined in the present application.

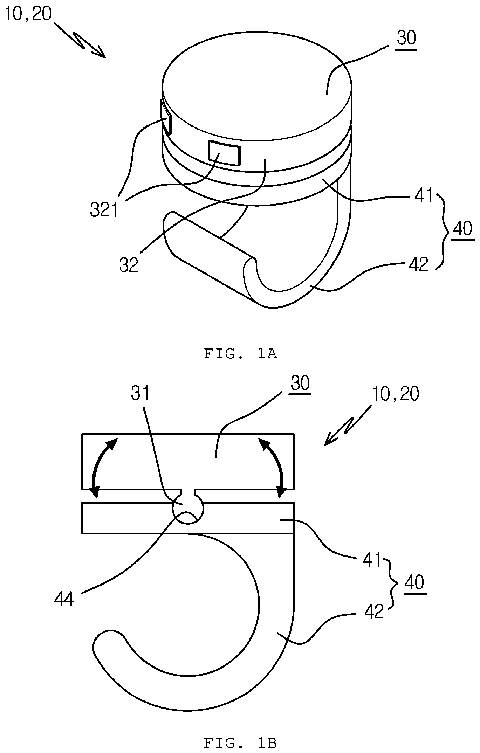

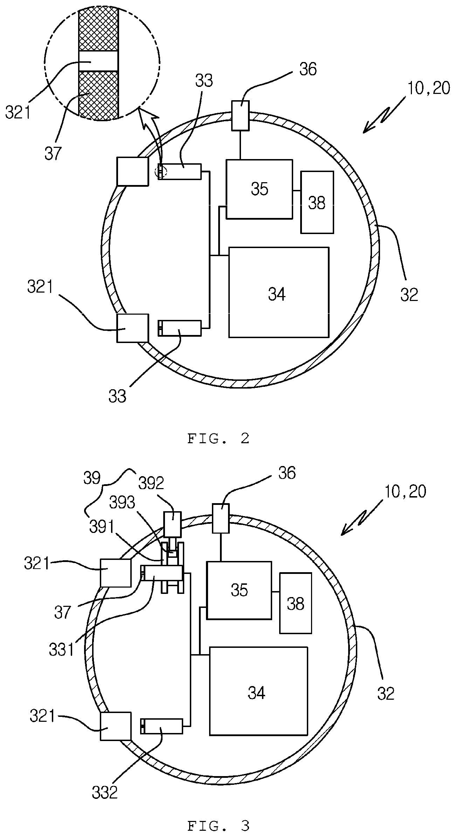

FIGS. 1A and 1B are a perspective view and a schematic cross-sectional view illustrating a billiards pointer according to an embodiment of the present disclosure. FIG. 2 is a diagram illustrating the configuration of a light emission body.

Referring to the drawings, a billiards pointer 10 according to the present disclosure is configured as a light emission ring 20 including a light emission body 30 and an attachment part 40 rotatably coupled to a lower portion of the light emission body.

The light emission body 30 of the light emission ring 20 has a luminous part 33 provided therein, and emits light in the form of vertical light to the outside so that a cue ball at a short distance and a first object ball at a long distance are simultaneously irradiated with the vertical light, and the light emission body 30 has a hinge ball 31 formed on the bottom surface thereof so as to be inserted into a ball recess 44 of the attachment part 40, which will be described later. The hinge ball 31 may be formed at the center of the light emission body 30, or may be formed at a point decentered to one side, and the hinge ball may be directly attached or coupled to the bottom surface of the light emission body, or a protrusion having a predetermined length may be formed thereon and the hinge ball may be coupled to the protrusion.

Next, the attachment part 40 includes an upper plate 41 that is coupled to the light emission body 30 so as to be spaced a predetermined distance apart from each other and a loop part 42 protruding downwards from the bottom surface of the upper plate 41. In addition, the light emission body 30 may be coupled to the attachment part 40 so as to rotate and tilt with respect thereto by means of ball coupling in which the hinge ball 31 of the light emission body is inserted into the ball recess 44 formed in the upper plate 41 of the attachment part 40. The ball recess 44 of the attachment part 40 and the hinge ball 31 of the light emission body 30 may have almost the same diameter to then be coupled to each other, or one of the ball recess and the hinge ball may be provided in a structure capable of being elastically expanded or contracted so that rotation and tilting are possible only when an external force is applied to the hinge ball that is formed to have a greater diameter than the ball recess. Here, the ball recess 44 may be configured as a pair of semicircular containers such that the entrance, through which the hinge ball is inserted, is configured to be separate from the outer surface of the upper plate of the attachment part and such that only an inner portion thereof is connected thereto, so that the entrance of the pair of semicircular containers is open when inserting the hinge ball into the same, thereby attaining the coupling. In addition, the hinge ball 31 may be formed as a pair of hemispheres having a gap in a straight or cross form formed in the direction first inserted into the ball recess so that the diameter of the hinge ball is reduced due to the gap when inserting the same into the ball recess, thereby attaining the ball coupling. Further, in addition to the above configuration of the ball recess 44 and the hinge ball 31, a ball recess may be formed on the bottom surface of the light emission body, and a hinge ball may be formed on the attachment part, thereby attaining ball coupling. A hinge ball cover, rather than the ball recess, surrounding the hinge ball may be formed to protrude, and this structure also falls within the scope of the present disclosure.

The loop part 42 of the attachment part 40 is attached to the index finger (forefinger) surrounding the upper portion of the cue, among the fingers supporting the cue, such that the light emission body 30 is positioned above the index finger, thereby emitting light from the higher position. At this time, the thickness of the upper plate may be increased in order to elevate the light emission position of the light emission body. In addition, as shown in the drawing, the loop part 42 may be formed in the form of a loop having an opening at one side such that the index finger is inserted from the side to the center thereof to then be fitted thereto, or the loop part may be provided in the form of a ring such that the index finger is inserted in the axial direction to then be fitted thereto. The loop part 42 may be made of silicone, rubber, or soft plastic having elasticity so as to come into close contact with the index finger.

Explaining the billiards pointer of the present disclosure in more detail,
the light emission body 30 includes a main body 32 having an accommodation space formed therein.

The main body 32 may be formed in a disk shape as shown in the drawing, or may be configured in various shapes such as a square, a rectangle, or the like, and the whole or a part of an upper or lower surface thereof may be configured as a removable cover to facilitate repair or replacement of various components inside. It is preferable that the main body is provided in a watertight structure by installing a packing including an O-ring in the coupling portion when the main body is attached and detached.

A luminous part 33, a power source 34, and a controller 35 are installed in the accommodation space of the main body 32. The luminous part 33 may generate light by receiving power from the power source 34 using, in general, an LED or a laser diode, and may include a light-condenser for condensing the generated light in one direction. In addition, two or more luminous parts may be configured to divide the thickness in units of mm, or 2 to 12 luminous parts, preferably 2 to 3 luminous parts, may be configured to check the thickness. Here, even if a plurality of lights is emitted, the total width of the plurality of lights emitted from the luminous parts is formed to be the same as the radius or diameter of the billiard ball. In addition, when the plurality of lights is emitted, a reference light, which is aligned with a cue, is provided in different colors from other lights, so that the light for checking the thickness and the light for aligning the cue are easily distinguished and used.

The power source 34 may be a replaceable primary battery or secondary battery, or may be a rechargeable secondary battery. In the case of the replacement type, replacement and installation may be performed by attaching and detaching the cover that is formed on the main body as described above, and in the case of the charging type, a charging terminal may be formed at one side of the main body to enable charging from the outside by a charging cable or a wireless charging method.

If an operation signal is received from the outside, the controller 35 connects the power source 34 to the luminous part 33 to supply power thereto. At this time, the light emission time may be configured to emit light by power supply only while the operation signal is input, or may be configured such that if an operation signal is input, power is supplied only for a predetermined time from the time at which the operation signal is input and is then automatically cut off.

The main body 32 may further include a tilt sensor 38 mounted thereto. If the front part from which light is emitted is directed upwards at about 10 to 30 degrees, or if the light emission body is inclined to the side at about 10 to 20 degrees, the tilt sensor 38 may transmit a signal to the controller 35, thereby shutting off the power supply to the luminous part 33. This is intended to block the light emitted from the luminous part in an environment other than the operation for hitting the billiard ball, thereby removing the risk of damaging the eyesight of surrounding people by the emitted light and then improving safety.

In addition, a button 36 for operating the luminous part 33 may be further formed on the outer surface of the main body 32. The button 36 is mounted in a structure capable of elastic repulsion by a spring so that the button returns to its original position when the pressing pressure is removed.

In addition, a light-transmission lens 321 may be mounted to the main body 32 in the forward direction so that light generated from the luminous part 33 is emitted to the outside through the light-transmission lens. A through-hole is formed on the main body, and the light-transmission lens 321 is mounted to the through-hole, and the edges thereof are sealed to prevent foreign matter from entering the inside of the main body, thereby enabling light emission.

In addition, a vertical filter 37 is further installed between the light-transmission lens 321 and the luminous part 33. A vertical light-transmission portion 371 is formed in the vertical filter 37 and converts the light, generated from the luminous part and then collected, into vertical light, and the converted vertical light is finally emitted to the outside through the light-transmission lens 321. In addition, the vertical filter 37 may have a reflection surface formed in the form of a triangular frustum, having a wide surface facing the luminous part and a narrow surface facing the light-transmission lens, in order to further concentrate the generated light into vertical light emitted in a vertical line, thereby collecting light in a vertical line. At this time, the light-transmission lens 321 may be formed as a flat lens to allow light to pass therethrough, or may be formed as a convex lens to increase the vertical length of the vertically collected vertical light, thereby emitting the light. In addition, the vertical filter 37 may be provided in a structure in which reflection surfaces are formed in the form of a triangular frustum in a rectangular transparent body, and at this time, a rectangular groove corresponding to the vertical filter may be formed inside the main body so that the vertical filter is able to be simply inserted and fixed thereto.

Two or more luminous parts may be installed at predetermined intervals in the light emission body 30. Although two luminous parts are configured and described in the present disclosure, three luminous parts may be formed and used as necessary, and this falls within the range in which the luminous parts are able to be easily modified on the basis of the present disclosure.

Referring to FIG. 3, the light-transmission lens 321 may be mounted to the main body 32, and the luminous parts 33 may include a first luminous part 331 and a second luminous part 332, having the vertical filter 37 mounted thereto, so that two vertical lights may be emitted. The luminous part may be provided by integrally forming the light-transmission lens and the vertical filter as a module or by integrally forming only the luminous part and the vertical filter as a module. In addition, the first luminous part 331 and the second luminous part 332, which are luminous parts, emit lights at equal intervals from each other, and the intervals are provided to be the same as the radius of the billiard ball.

In addition, the luminous parts 33 may be adjusted in the distance therebetween by a side moving means 39. The side moving means 39 is configured to include a support 391 for supporting the first luminous part 331 to be movable in the lateral direction, a rotation bar 392 having one end exposed to the outside of the main body 32 of the light emission body and manually receiving a rotational force, and a gearbox 393 for moving the first luminous part in the lateral direction by rotation of the rotation bar.

The support 391 may be configured as a frame, or may be formed as an inner groove of the main body of the light emission body, and may include various means for stably supporting the first luminous part 331 so as to stably and horizontally move without vertical and horizontal pivoting. In addition, the rotation bar 392 is a structure that receives a rotational force from a user who directly rotates the same, but the rotation bar may be configured as a rotation button and a motor may be mounted between the rotation button and the gearbox so that the motor is operated by clicking the rotation button, thereby generating a rotational force. The gearbox 393 may be a rack gear integrally installed in the first luminous part and a worm formed on the rotation bar, and may have configuration in which a transmission gear is further mounted between the rack gear and the worm. If the rotation bar is rotated in the above structure, the rotational force is transmitted to the rack gear through the worm, and the first luminous part integrally coupled to the rack gear is slightly moved in the lateral direction, which is the left and right direction, thereby adjusting the gap between the first luminous part and the second luminous part.

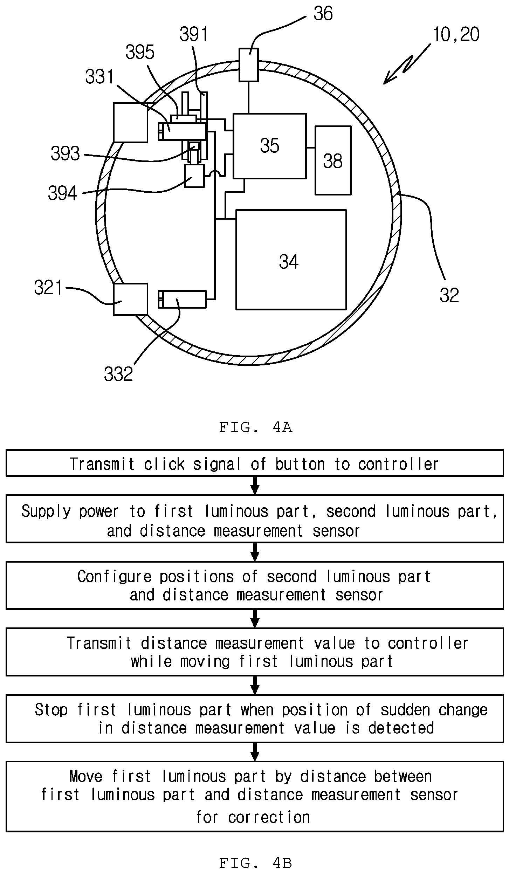

Referring to FIG. 4A, the distance between the first luminous part and the second luminous part may be adjusted by applying an automatic operation of the side moving means 39.

As shown in the drawing, the side moving means 39 may be configured to include a support 391 for supporting the first luminous part 331 so as to move in the lateral direction, a gearbox 393 for moving the first luminous part in the lateral direction, and a motor 394 for transmitting power to the gearbox. A distance measurement sensor 395 is mounted to the first luminous part 331, and the first luminous part 331 is moved in the lateral direction in the state in which the vertical light emitted from the second luminous part 332 is fixed so as to pass through the center of the cue ball such that the distance between the first luminous part 331 and the second luminous part 332 is equal to the radius of the billiard ball. At this time, the distance is measured by the distance measurement sensor 395, and the distance measurement sensor 395 performs measurement along the horizontal line passing through the center of the cue ball such that the time at which discontinuity occurs due to a sudden change in the measurement value is determined to correspond to the lateral end of the cue ball, thereby enabling automatic movement of the first luminous part 331. At this time, the first luminous part 331 may be further moved by the distance between the light emission point of the first luminous part 331 and a measurement reference point of the distance measurement sensor 395, thereby configuring the accurate distance between the first luminous part and the second luminous part as the radius of the billiard ball. In addition, the size of the billiard ball may be detected by applying various known techniques such as directly receiving the light emitted from the luminous part and detecting the size of the billiard ball, measuring the size of the billiard ball through a plurality of image cameras, and the like.

Referring to FIGS. 4A and 4B, an automatic operation process of the side moving means will be described.

A first step is performed such that a click signal of the button 36 of the light emission body 30 is transmitted to the controller 35. The button 36 may generate an operation signal, and may transmit the same to the controller 35, and a button that causes the luminous part to emit light and a button that operates the distance measurement sensor may be configured as one, or may be configured separately, thereby generating respective signals and transmitting the same to the controller.

Next, in a second step, the controller 35 receiving the operation signal supplies power from the power source 34 to the first luminous part 331 and the second luminous part 332, which are luminous parts 33, so as to emit light, and the distance measurement sensor 395 is operated. That is, when the operation signal is received, the controller 35 simultaneously supplies power to the luminous part 33 and the distance measurement sensor 395, thereby operating the same.

In a third step, the vertical light of the second luminous part 332 is arranged to pass through the center of the cue ball or target ball, and the measurement position of the distance measurement sensor 395 is configured on a horizontal line passing through the center of the cue ball. That is, this is intended to determine the radius of the billiard ball by checking the outermost point of the billiard ball in the left and right/lateral direction. The distance measurement sensor may perform measurement using an infrared ray, an ultrasonic wave, laser, or the like.

In a fourth step, power is supplied to the motor 394 to horizontally move the first luminous part 331 to which the distance measurement sensor is attached, and distance measurement values continuously measured by the distance measurement sensor are transmitted to the controller 35. In the measurement of this step, since the degree of change in the distance measurement value, rather than the actual distance measurement values, is important, the controller performs determination on the basis of the amount of change in the received distance measurement value.

In a fifth step, if discontinuity is detected in the measurement direction due to a sudden change in the received distance measurement value, the controller 35 shuts off the power to the motor 394, thereby stopping the movement of the first luminous part 331. In this step, if the distance measurement value is not continuous and changes suddenly, this indicates that there is discontinuity in the object, and in the case where the front object is a billiard ball, this means that the light falls outside of the outer boundary of the billiard ball. Thus, the point of the sudden change is determined to be the outermost point of the billiard ball, thereby stopping the first luminous part.

In a sixth step, the first luminous part 331 is further moved by the distance between the center of the first luminous part 331 that emits the vertical light and the distance measurement reference point in the distance measurement sensor 395 to align the center of the first luminous part with the measurement point of the distance measurement sensor. The movement distance in this step may be configured in advance to automatically perform correction corresponding to the distance between the first luminous part and the distance measurement sensor so that one of two vertical lights generated from the light emission body is emitted to the center of the cue ball and the other is emitted to the outermost side of the cue ball, thereby checking the thickness by which the cue ball collides with the first object ball that is located behind the cue ball.

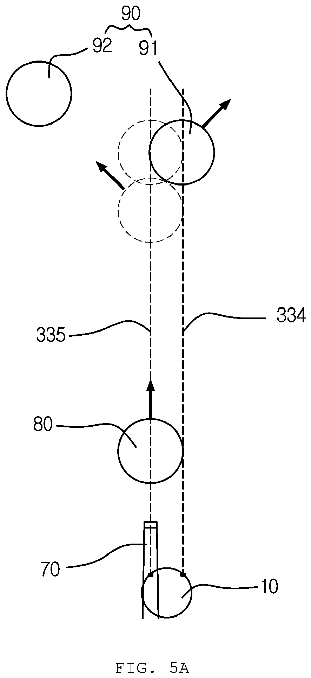

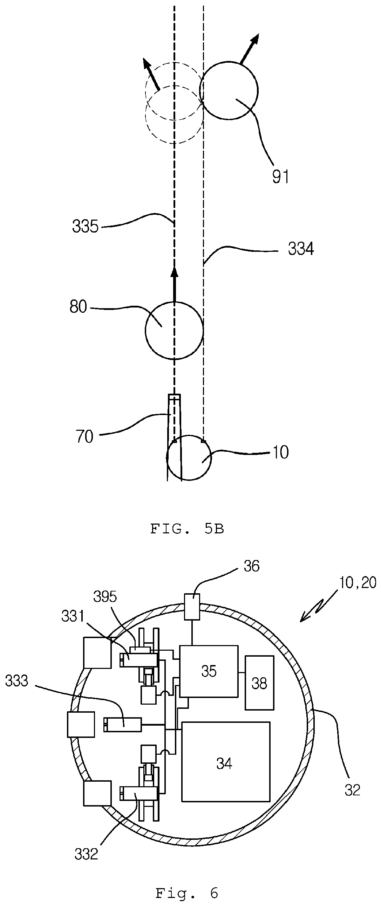

Referring to FIGS. 5A and 5B, when a first vertical light 335, which is one of two vertical lights emitted from the light emission body 30 of the light emission ring 20 according to the present disclosure, is arranged to pass through the center of the cue ball 80, a second vertical light 334, which is another vertical light, is directed to the outer point of the cue ball in the width direction thereof. Therefore, when hitting the cue ball 80 in the state in which the second vertical light 334 is aligned to pass through the center of the first object ball 91 of the object balls 90 as shown in FIG. 5A, the cue ball 80 collides with the first object ball 91 at the off-center point thereof by half of the ball, and moves diagonally to then hit the second object ball 92. In addition, in order to perform a thin shot for the cue ball 80 with respect to the first object ball 91, the cue ball 80 is to be hit in the state in which the second vertical light 334 passes through an outer point of the first object ball 91, which is the off-center point in the width direction thereof as shown in FIG. 5B. Therefore, the thickness by which the cue ball 80 collides with the first object ball 91 when hitting the cue ball 80 is determined depending on how inward the second vertical light 334 collides with the first object ball 91.

In addition, the present disclosure may further include a third luminous part 333 installed as shown in FIG. 6, thereby emitting three vertical lights. Among the three vertical lights, the vertical light emitted from the third luminous part 333 passes through the center of the cue ball, and the vertical lights at both sides pass through the outermost point of the cue ball in the width direction thereof. At this time, the width of the billiard ball is configured by moving the first luminous part 331 using the side moving means by the above-described method, and the second luminous part 332 may be moved by the same amount of movement as the first luminous part 331 by the controller 35, thereby emitting three vertical lights at equal intervals.

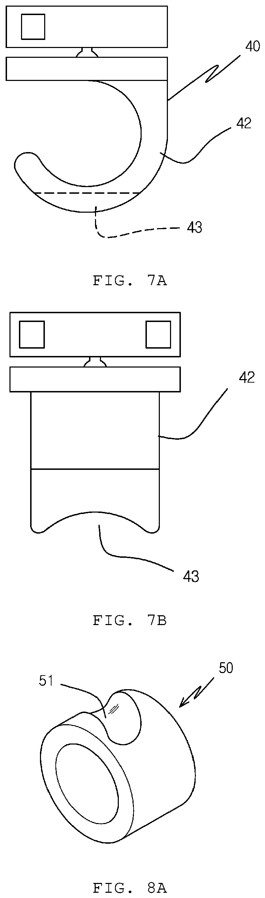

Meanwhile, referring to FIGS. 7A and 7B, the attachment part 40 has a guide groove 43 formed on the bottom surface of the loop part 42, which comes into contact with the cue to enable the cue to reciprocate in the longitudinal direction without swaying left and right during the aiming operation or the hitting operation.

The guide groove 43 is formed in a curved surface in the width direction of the loop part 42 to surround the cue, and preferably, the diameter of the front surface, from which the vertical light is emitted, is formed to be less than the diameter of the rear surface, thereby forming a conical curved surface, which is similar to the curved surface of the cue. In addition, the guide groove may be formed in various forms capable of supporting the circular cross section of the cue, such as a U-shaped groove and a V-shaped groove.

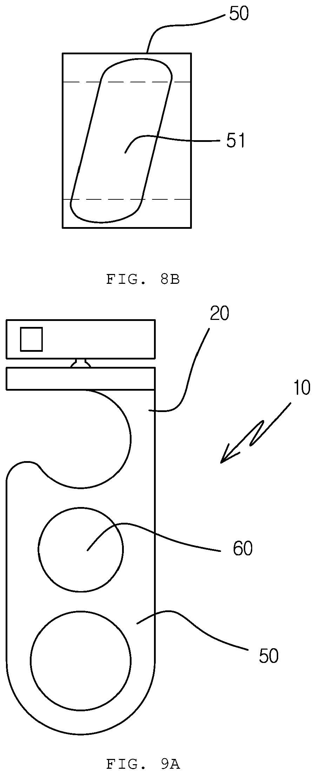

Referring to FIGS. 8A and 8B, the billiards pointer 10 of the present disclosure may further include a supporting ring 50 fitted to the thumb to support the cue at the upper and lower portions by the light emission ring 20 and the supporting ring 50, thereby stably moving the cue in the longitudinal direction without swaying left and right.

The supporting ring 50 is configured in the form of a ring or a loop that is fitted to the thumb, and a rest groove 51, on which the cue is placed, is formed on the upper portion thereof. The rest groove 51 is formed in the longitudinal direction of the cue when the supporting ring is fitted to the thumb and the cue is surrounded and supported by the index finger, and is formed in the same direction as the guide groove formed in the attachment part of the upper light emission ring.

As described above, the billiards pointer 10 of the present disclosure presses the upper portion of the cue downwards through the guide groove 43 formed in the attachment part 40 of the light emission ring, and presses the lower portion of the cue upwards through the rest groove 51 of the supporting ring 50. This allows the cue moving in the longitudinal direction to be pressed by the guide groove 43 and the rest groove 51 at the upper and lower portions to minimize the left and right sway, thereby enabling hitting a desired point of the cue ball during the aiming operation or the hitting operation.

The light emission ring 20 and the supporting ring 50 may be provided in a separate form as shown in the drawing, or may be provided to be integrally formed as one.

Referring to FIG. 9A, the integral billiards pointer 10 may have an insertion hole 60 formed between the light emission ring 20 and the supporting ring 50 thereof in order to insert the cue thereinto so that the cue is able to reciprocate in the longitudinal direction in the insertion hole. In addition, although the attachment part may be formed in a ring shape in the light emission ring 20, it is preferably provided in a hook shape as shown in the drawing such that the index finger is inserted and fitted into the attachment part in the state in which the thumb is inserted into the supporting ring.

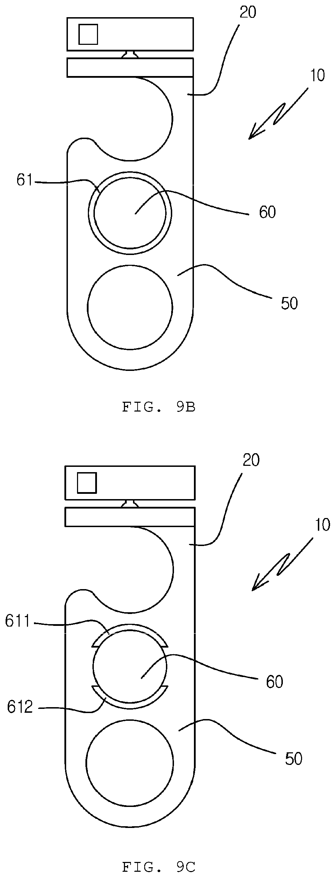

Here, the insertion hole 60 may have an inner layer 61 formed of a hard plastic material on the inner surface thereof and an outer side thereof formed of a silicon material as shown in FIG. 9B. In this structure, the inner layer 61 of the insert hole 60 in contact with the cue may facilitate the forward and backward movement of the cue without friction, and the outer side may transfer the elastic deformation force by pressing to the inner layer of the insertion hole, thereby pressing and supporting the cue by deformation of the inner layer.

In addition, referring to FIG. 9C, the insertion ring may be vertically divided into three parts, instead of providing the inner layer in a ring shape, such that an upper inner layer 611 is formed on the upper inner surface and a lower inner layer 612 is formed on the lower inner surface. An intermediate part therebetween is formed of a silicon material so that the gap of the intermediate part is reduced when external pressure is applied, thereby pressing and supporting the cue upwards and downwards by the upper inner layer 611 and the lower inner layer 612.

In addition, the billiards pointer 10 of the present disclosure may be variously modified in design thereof to easily attach the billiards pointer to the hand, and for example, the through-hole axis of the attachment part (40) and the through-hole axis of the supporting ring (50) may be formed parallel to each other, or the axes thereof may be spaced apart from each other at a predetermined angle for convenience in attachment to the hand.

## Claims

1. A billiards pointer worn on a finger to be used, which is configured as a light emission ring comprising:
a light emission body (30) having a luminous part (33) in an accommodation space therein to transmit light to the outside in the form of vertical light, thereby simultaneously emitting vertical light to a cue ball at a short distance and a first object ball at a long distance; and
an attachment part (40) having an upper plate (41) rotatably coupled to a lower portion of the light emission body and a loop part (42) formed to extend downwards from the upper plate and fitted to an index finger,
wherein the light emission body comprises 2 to 12 luminous parts emitting light at equal intervals in the width direction, and
wherein the total width of the vertical light emitted from the respective luminous parts is configured to be equal to a radius or diameter of a billiard ball.

2. The billiards pointer of claim 1, wherein the rotatable coupling between the light emission body (30) and the attachment part (40) is provided by forming a hinge ball (31) on the lower portion of the light emission body (30), by forming a ball recess (44), into which the hinge ball (31) of the light emission body is inserted, on the upper plate of the attachment part, and by configuring a bottom surface of the light emission body (30) and an upper surface of the upper plate (41) to be spaced a predetermined distance apart from each other in a state in which the hinge ball (31) is coupled to the ball recess (44), thereby enabling the light emission body (30) to rotate and tilt up and down based on the coupling portion of the hinge ball (31) and the ball recess (44).

3. The billiards pointer of claim 1, wherein the light emission body (30) comprises:
a main body (32) having an accommodation space formed therein;
a luminous part (33), a power source (34), and a controller (35) installed in the accommodation space of the main body;
a button (36) formed on the outer surface of the main body to operate the luminous part; and
a vertical filter (37) installed in the front surface of the main body or in the front surface of the luminous part and configured to transmit the light emitted from the luminous part in the form of vertical light so as to simultaneously emit the vertical light to the cue ball at a short distance and the first object ball at a long distance.

4. The billiards pointer of claim 3, wherein the main body (32) of the light emission body (30) has a tilt sensor (38) mounted thereto such that power supplied to the luminous part (33) is shut off by the controller (35) at a predetermined angle or more, thereby blocking the emission of the vertical light.

5. The billiards pointer of claim 3, wherein the vertical filter (37) has a vertical light-transmission portion (371) formed therein through which light passes, and is integrally installed in the front surface of each luminous part to emit vertical light.

6. The billiards pointer of claim 3, wherein the luminous part (33) comprises a first luminous part (331) and a second luminous part (332),
wherein one of two vertical lights emitted is used as a central vertical light passing through the center of the cue ball, and the other is used as a lateral vertical light spaced at equal intervals from the central vertical light.

7. The billiards pointer of claim 6, wherein the first luminous part (331) is moved in the left and right direction by a side moving means (39) to adjust the distance between the first luminous part (331) and the second luminous part (332).

8. The billiards pointer of claim 7, wherein the side moving means (39) comprises:
a support (391) for supporting the first luminous part to be movable in the lateral direction;
a rotation bar (392) having one end exposed to the outside of the main body (32) of the light emission body and receiving rotational force manually; and
a gearbox (393) for moving the first luminous part in the lateral direction by rotation of the rotation bar.

9. The billiards pointer of claim 7, wherein the side moving means (39) comprises:
a support (391) for supporting the first luminous part (331) to be movable in the lateral direction;
a gearbox (393) for moving the first luminous part in the lateral direction; and
a motor (394) for transmitting power to the gearbox;
wherein a distance measurement sensor (395) is mounted to the first luminous part (331),
wherein the first luminous part (331) is moved in the lateral direction to a side end of the cue ball measured by the distance measurement sensor (395) in a state in which the vertical light emitted from the second luminous part (332) is fixed to pass through the center of the cue ball, and is further moved by the distance between the distance measurement sensor (395) and the first luminous part (331), thereby configuring the distance between the first luminous part (331) and the second luminous part (332) to be the same as the radius of the billiard ball.

10. The billiards pointer of claim 9, wherein the side moving means (39) is controlled by
a first step of transmitting a click signal of the button (36) of the light emission body to the controller (35) ;
a second step of supplying power of the power source (34) to the first luminous part (331) and the second luminous part (332) to emit light and operate the distance measurement sensor (395);
a third step of arranging the vertical light of the second luminous part (332) to pass through the center of the cue ball and configuring the measurement position of the distance measurement sensor (395) as a horizontal line passing through the center of the cue ball;
a fourth step of supplying power to the motor (394) to horizontally move the first luminous part (331) to which the distance measurement sensor (395) is attached and transmitting a distance measurement value continuously measured by the distance measurement sensor (395) to the controller (35);
a fifth step of shutting off the power to the motor (394) by the controller (35) if discontinuity is detected in the measurement direction due to a sudden change in the received distance measurement value, thereby stopping the movement of the first luminous part (331); and
a sixth step of further moving the first luminous part (331) by the distance between the predetermined center of the first luminous part (331) and the center of the distance measurement sensor (395) by the controller (35).

11. The billiards pointer of claim 1, wherein the attachment part (40) has a guide groove (43) formed on the bottom surface of the loop part (42) in the light emission direction or the longitudinal direction of the cue, and
wherein the guide groove comes into slidable contact with the upper surface of the cue to support the cue so as to move in the longitudinal direction without swaying left and right during an aiming operation or a hitting operation.

12. The billiards pointer of claim 11, further comprising a supporting ring (50) having a loop part (42) formed to insert the thumb thereinto and a rest groove (51) formed on the upper surface thereof to place the cue thereon,
wherein when hitting the cue ball, the attachment part (40) and the supporting ring (50) come into contact with the upper and lower portions of the cue, thereby supporting the cue to move only in the longitudinal direction.

13. The billiards pointer of claim 12, wherein the attachment part (40) and the supporting ring (50) are integrally formed of a silicon material.

14. The billiards pointer of claim 13, wherein an insertion hole (60), into which the cue is inserted, is formed between the attachment part (40) and the supporting ring (50),
wherein an inner layer (61) is formed of a plastic material on the inner surface of the insertion hole,
wherein the insertion hole (60) is vertically divided into three parts such that an upper inner layer (611) is formed on the upper inner surface, such that a lower inner layer (612) is formed on the lower inner surface, and such that an intermediate part is formed of only a silicon material so that a gap of the intermediate part is reduced when external pressure is applied.
